# EUROPÄISCHE PATENTSCHRIFT

(11) **EP 1 310 581 B1**
(45) Veröffentlichungstag und Bekanntmachung des Hinweises auf die Patenterteilung: **19.07.2017**
(21) Anmeldenummer: 02023337.5
(22) Anmeldetag: 18.10.2002
(51) Int. Cl.: C23G 1/36, C02F 1/44, C02F 1/66, C02F 1/62, C02F 101/14

(54) **Verfahren zur Behandlung flusssäure- und metallhaltiger Abwässer**
Process for the treatment of waste water containing hydrofluoric acid and metals
Procédé de traitement d'eaux usées contenant de l'acide fluorhydrique et des métaux

(30) Priorität: 07.11.2001 AT 17552001
(43) Veröffentlichungstag der Anmeldung: 14.05.2003
(73) Patentinhaber: Andritz AG, 8045 Graz (AT)
(72) Erfinder: Starcevic, Jovan, Dr. Dipl.-Ing., 1230 Wien (AT)
(74) Vertreter: Schweinzer, Friedrich

(56) Entgegenhaltungen:
- EP-A- 0 341 792
- EP-A- 0 398 863
- WO-A-93/02227
- WO-A-96/27554
- US-A- 5 980 850
- US-B1- 6 210 650
- PATENT ABSTRACTS OF JAPAN Bd. 0131, Nr. 58 (C-586), 17. April 1989 (1989-04-17) & JP 63 315519 A (KEMIRAITO KOGYO KK; others: 01), 23. Dezember 1988 (1988-12-23)

## Beschreibung

Die Erfindung betrifft ein Verfahren zur Behandlung säure- und metallhaltiger Spülwässer aus Beizanlagen, wobei die Spülwässer Flusssäure enthalten, umfassend die Zugabe von basischer Lösung oder Gas und das Binden der freien Säuren im Abwasser und das nachfolgende Auftrennen des Abwassers in zwei Teilströme, wobei der erste Teilstrom einen geringeren Metallgehalt und der zweite Teilstrom einen höheren Metallgehalt aufweist.

Die Abwässer (Spülwässer) nach beispielsweise einer Mischsäurebeize werden üblicherweise in die Neutralisation geleitet. Dort werden sie mit Kalkmilch neutralisiert und anschließend abfiltriert. Dabei verbleiben die Fluoride und die Metalle im Filterkuchen. Die gesamte Nitratfracht hingegen gelangt in den Vorfluter. Da nun die Nitratfracht der Abwässer immer mehr und strenger reglementiert wird, wurde das " nitratfreie Beizen" vorgeschlagen, d.h. als Beizmedium wird z.B. Schwefelsäure, Flusssäure und Wasserstoffperoxid eingesetzt. Das bringt allerdings den Nachteil mit sich, dass die Oberflächenqualität nicht mehr so gut ist und dass die Menge des nach der Neutralisation anfallenden Schlammes um ca. 100% größer ist, was einen erhöhten Aufwand bei der Entsorgung nach sich zieht. Eine weitere vorgeschlagene Lösung zur Nitratreduktion ist die pyrohydrolytische Behandlung der neutralisierten Altsäure, was für die Altsäure eine Nitratfrachtabsenkung von 70-90% ergibt. Es verbleibt aber die Nitratfracht aus dem Spülwasser.

Die US 6,210,650 B1 offenbart ein Verfahren zur Regeneration von Salzsäure durch eine pyrohydrolytische Behandlung. Mischsäure wird bei diesem Verfahren nicht verwendet. Die US 5,980,850 offenbart ein Verfahren zur Rückgewinnung von Säuren, insbesondere von Salzsäure, Flusssäure und Salpetersäure aus metallhaltigen Lösungen durch pyrohydrolytische Behandlung.

Die Aufgabe der Erfindung war daher die Verbesserung der herkömmlichen Verfahren zur wirtschaftlicheren, insbesonders energetisch günstigeren Durchführung und weiter zur weitest möglichen Absenkung der Nitratfracht und zur Rückgewinnung auch flüchtiger Säuren (Salzsäure, Salpeter/Flusssäure, etc.).

Zur Lösung dieser Aufgabe ist gemäß der vorliegenden Erfindung vorgesehen, dass die Flusssäure (freie Säuren) durch Zugabe von Ammoniak gebunden wird und so als Ammoniumfluorid vorliegt und nachfolgend die Auftrennung des Abwassers in Teilströme erfolgt und der Teilstrom mit dem höheren Metallgehalt einer Regenerationsanlage aufgegeben und dort einer pyrohydrolytischen Behandlung, vorzugsweise einem Sprühröst-Vorgang, unterworfen wird, wobei aus dem Ammoniumfluorid wieder Flusssäure gewonnen wird. Der Einsatz vom Ammoniak d.h. vom Ammoniumion (NH₄⁻) anstatt Alkali- bzw. Erdalkali-metallionen bewirkt, dass in einer allfälligen nachfolgenden Regenerationsanlage zersetzbare Salze vorliegen und aus dem Ammoniumfluorid (NH₄F) die Flussäure (HF) gewonnen werden kann. Durch die pyrohydrolytische Regeneration, vorzugsweise einen Sprühröst-Vorgang, werden die Nitrate zu einem wesentlichen Teil in NOₓ Gase zersetzt und können in einem weiteren Schritt auf DeNOₓ - Katalysatoren in Stickstoff und Wasser umgewandelt werden. Die nichtzersetzten Nitrate werden als Salpetersäure rückgewonnen. Somit kann durch die pyrohydrolytische Regeneration die Nitratfreiheit der Abwässer gewährleistet werden. Da der überwiegende Metall- und Säuregehalt in einem der beiden Teilströme verbleibt, muss lediglich dieser Teilstrom weiter behandelt werden, während der andere Teilstrom mit seinem erheblich reduzierten Metall-und Säuregehalt in einfacher Weise entsorgt oder in die Verfahren rückgeführt werden kann, aus welchen das Abwasser abgezogen worden ist. Durch die Neutralisation mit Ammoniak fehlen freie, aggressive Radikale, so dass für die Auftrennstufe (z.B. Eindampfanlage oder Membranfiltration) günstige Werkstoffe verwendet werden können.

Gemäß einer bevorzugten Ausführungsform ist die Erfindung weiters gekennzeichnet durch ein Auftrennen des Abwassers in einen ersten Teilstrom mit geringerem Metallgehalt und höherem Volumsanteil und einen zweiten Teilstrom mit höherem Metallgehalt und geringerem Volumsanteil. Damit ist die Weiterbehandlung und/oder Entsorgung des Teilstroms mit hohem Metall- und Säuregehalt noch weiter begünstigt, da dessen Menge gegenüber der im wesentlichen unbehandelt rückführbaren Menge beträchtlich geringer ist.

In energetisch günstiger Weise kann die Auftrennung des Abwassers in die beiden Teilströme gemäß einem weiteren Erfindungsmerkmal durch ein Membrantrennverfahren erfolgen, vorzugsweise durch Umkehrosmose. Mit derartigen Verfahren sind Teilstrom-Verhältnisse von bis zu 3:7 wirtschaftlich machbar, wobei im kleineren Teilstrom der überwiegende Anteil an Metallen und Säuren verbleibt. Durch die vorangegangene Neutralisation können hier praktisch handelsübliche Membranwerkstoffe eingesetzt werden. Das Trennverhalten und die Wirkungsgrade sind in diesem Fall gegenüber einer in Mischsäure durchgeführten Auftrennung wesentlich besser.

Um noch höhere Volumsdifferenzen zwischen den beiden AbwasserTeilströmen zu erhalten, kann gemäß einer anderen Variante des erfindungsgemäßen Verfahrens vorgesehen sein, dass die Auftrennung des Abwassers in die beiden Teilströme durch Eindampfung um zumindest 50% erfolgt. Dabei wird eine Konzentration der Salze im Teilstrom mit geringerem Volumen erreicht, die in etwa jener in der Altsäure entspricht, so dass eine Säurerückgewinnung daraus besonders wirtschaftlich machbar ist. Bei relativ geringem Aufwand sind mit der Eindampfung Volumsverhältnisse von etwa 1:9 oder noch höher möglich.

Eine besonders vorteilhafte Ausführungsform der Erfindung sieht zur Verbindung der Vorteile beider zuvor genannten Varianten vor, dass die Auftrennung des Abwassers in die beiden Teilströme durch ein Membrantrennverfahren, vorzugsweise durch Umkehrosmose, und eine anschließende Eindampfung um zumindest 50% erfolgt.

Vorteilhafterweise wird bei erfindungsgemäßen Verfahren um zumindest 70%, vorzugsweise um zumindest 90%, eingedampft.

Um eine leichtere und wartungsfreiere Durchführung der Verdampfung zu ermöglichen, kann der Eindampfung zumindest ein Filtrierschritt vorausgehen. Dabei werden hauptsächlich die Hydroxide entfernt, welche zu einem Verkrusten der Verdampferflächen führen könnten.

Eine weitere Absenkung der Nitratfracht ist möglich, wenn der pH-Wert auf einen Wert zwischen 2 und 8, vorzugsweise zwischen 3 und 5, eingestellt wird. Damit kann ein übermäßiger Chemikalienverbrauch vermieden werden, wobei aber dennoch zumindest die freien Säuren gebunden werden.

Bei einer Ausführungsform der Erfindung, bei welcher die Brüden der Eindampfung aufgefangen und rückgeführt werden, können diese wieder verwendet werden, beispielsweise als Spülwasser bei Beizanlagen. Die Brüden sind nur wenig mit Ammoniak verunreinigt und es ist somit vor der Rückführung kein zusätzlicher Reinigungsschritt erforderlich.

Um eine noch höhere Sauberkeit der Brüden zu erreichen, können diese einem lonentausch- oder Membrantrennverfahren unterworfen werden.

Mit den oben dargelegten Verfahrensschritten ist ein allfälliger Nitratgehalt soweit im zur Entsorgung oder für die vereinfachte Weiterbehandlung gedachten Teilstrom möglich, dass die immer strengeren Umweltauflagen zu erfüllen sind. Beispielsweise sind Nitratreduktionen um und über 90% möglich.

In der nachfolgenden Beschreibung soll die Erfindung anhand der Resultate von mehreren Eindampfversuchen erläutert werden.

Das von einer Edelstahlbeize stammende Spülwasser hatte folgende Zusammensetzung:

| | |
|---|---|
| Fe³⁺ : | 2,57 g/l |
| Cr³⁺ : | 0,52 g/l |
| Ni²⁺ : | 0,30 g/l |
| ∑HF : | 4,4 g/l |

Dieses Spülwasser wurde dann mit Ammoniak versetzt, so dass ein bestimmter, in den einzelnen Versuchen unterschiedlicher, pH-Wert eingestellt wurde, anschließend wurde das derart neutralisierte Spülwasser eingedampft. Die Eindampfung fand bei 100 °C (Wasserbad) und einem Unterdruck von 0,5 bar statt. Vorzugsweise wird dazu ein Vakuumverdampfer eingesetzt, insbesonders in zweistufiger Ausführung. Ebenfalls mögliche Verdunster sind weniger vorteilhaft.
Die Brüden wurden anschließend chemisch analysiert.
VERSUCH 1:
Zugabe von 3,4 g/l NH₃;
pH vor Destillation: 2,50, kein Niederschlag
Destillat: ca. 90 %, pH = 2,64

| | |
|---|---|
| NO₃⁻: | 11 mg/l |
| F⁻ : | 192 mg/l |
| NH₄⁺: | 6 mg/l |

VERSUCH 2:
Zugabe von 4,6 g/l NH₃;
pH vor Destillation: 3,32, kein Niederschlag
Destillat: ca. 90 %, pH = 3,0

| | |
|---|---|
| NO₃⁻: | ∼ 1 mg/l |
| F⁻ : | 121 mg/l |
| NH₄⁺: | 8 mg/l |

VERSUCH 3:
Zugabe von 8,16 g/l NH₃;
pH vor Destillation: 6,93, sofortige Niederschlagsbildung
Destillat: ca. 90 %, pH = 10,77

| | |
|---|---|
| NO₃⁻: | < 1 mg/l |
| F⁻ : | 163 mg/l |
| NH₄⁺: | 830 mg/l |

VERSUCH 4:
Zugabe von 5,7 g/l NH₃;
pH vor Destillation: 4,90, leichte Niederschlagsbildung
Destillat: ca. 90 %, pH = 8,50

| | |
|---|---|
| NO₃⁻: | < 1 mg/l |
| F⁻ : | 26 mg/l |
| NH₄⁺: | 15 mg/l |

VERSUCH 5:
Zugabe von 5,7 g/l NH₃;
pH vor Destillation: 4,90, leichte Niederschlagsbildung
Destillat: ca. 50 %

| | |
|---|---|
| NO₃⁻: | < 1 mg/l |
| F⁻ : | 23 mg/l |
| NH₄⁺: | 14 mg/l |

VERSUCH 6:
Zugabe von 5,7g/l NH₃;
pH vor der Abtrennung: 4,90, leichte Niederschlagsbildung
nach der Umkehrosmose 50% Permeat mit

| | |
|---|---|
| NO₃⁻: | 1mg/l |
| F⁻ : | 5 mg/l |

VERSUCH 7:
das Konzentrat (= Retentat) aus dem Versuch 6 wurde weiter eingedampft
Destillat ca 80%; pH = 8,5

| | |
|---|---|
| NO₃⁻: | 1m/l |
| F⁻ : | 20 mg/l |
| NH₄⁺ : | 15 mg/l |

## Patentansprüche

1. Verfahren zur Behandlung säure- und metallhaltiger Spülwässer aus Beizanlagen, wobei die Spülwässer Flusssäure enthalten, umfassend die Zugabe von basischer Lösung oder Gas und das Binden der freien Säuren im Abwasser und das nachfolgende Auftrennen des Abwassers in zwei Teilströme, wobei der erste Teilstrom einen geringeren Metallgehalt und der zweite Teilstrom einen höheren Metallgehalt aufweist, **dadurch gekennzeichnet, dass** die Flusssäure durch Zugabe von Ammoniaklösung oder -gas gebunden wird und als Ammoniumfluorid vorliegt und nachfolgend die Auftrennung des Abwassers in Teilströme erfolgt und nur der Teilstrom des Spülwassers mit dem höheren Metallgehalt einer Regenerationsanlage einer Beizanlage aufgegeben und dort einer pyrohydrolytischen Behandlung, vorzugsweise einem Sprühröst-Vorgang, unterworfen wird, wobei durch die pyrohydrolytische Behandlung aus dem Ammoniumfluorid wieder Flusssäure gewonnen wird.

2. Verfahren nach Anspruch 1, **gekennzeichnet durch** ein Auftrennen des Abwassers in einen ersten Teilstrom mit geringerem Metallgehalt und höherem Volumsanteil und einen zweiten Teilstrom mit höherem Metallgehalt und geringerem Volumsanteil.

3. Verfahren nach Anspruch 1 oder 2, **dadurch gekennzeichnet, dass** die Auftrennung des Abwassers in die beiden Teilströme durch ein Membrantrennverfahren erfolgt, vorzugsweise durch Umkehrosmose.

4. Verfahren nach Anspruch 1 oder 2, **dadurch gekennzeichnet, dass** die Auftrennung des Abwassers in die beiden Teilströme durch Eindampfung um zumindest 50% erfolgt.

5. Verfahren nach Anspruch 1 oder 2, **dadurch gekennzeichnet, dass** die Auftrennung des Abwassers in die beiden Teilströme durch ein Membrantrennverfahren, vorzugsweise durch Umkehrosmose, und eine anschließende Eindampfung um zumindest 50% erfolgt.

6. Verfahren nach einem der Ansprüche 4 oder 5, **dadurch gekennzeichnet, dass** um zumindest 70%, vorzugsweise um zumindest 90%, eingedampft wird.

7. Verfahren nach zumindest einem der Ansprüche 4 bis 6, **dadurch gekennzeichnet, dass** der Eindampfung zumindest ein Filtrierschritt vorangeht.

8. Verfahren nach zumindest einem der Ansprüche 1 bis 7, **dadurch gekennzeichnet, dass** der pH-Wert auf einen Wert zwischen 2 und 8, vorzugsweise zwischen 3 und 5, eingestellt wird.

9. Verfahren nach einem der Ansprüche 4 bis 7, **dadurch gekennzeichnet, dass** die Brüden der Eindampfung aufgefangen und als Spülwasser in die Beizanlage rückgeführt werden.

10. Verfahren nach Anspruch 9, **dadurch gekennzeichnet, dass** die Brüden einem lonentausch- oder Membrantrennverfahren unterworfen werden.

## Claims

1. Process for treating acidic and metal-containing rinsing water from pickling lines, where the rinsing water contains hydrofluoric acid, comprising the addition of an alkaline solution or gas and bonding of the free acids in the waste water, followed by separation of the waste water into two partial streams, where the first partial stream has a lower metal content and the second partial stream has a higher metal content, **characterised in that** the hydrofluoric acid is bonded by adding an ammonia solution or gas and is present in the form of ammonium fluoride and the waste water is separated afterwards into partial flows and only the partial flow of the rinsing water with the higher metal content is fed to a regeneration plant of a pickling line and undergoes pyrohydrolytic treatment there, preferably spray roasting, in which hydrofluoric acid is recovered again from the ammonium fluoride as a result of pyrohydrolytic treatment.

2. Process according to claim 1, **characterised by** the waste water being split into a first partial stream with a lower metal content and a higher share of the volume and a second partial stream with a higher metal content and a lower share of the volume.

3. Process according to claim 1 or 2, **characterised in that** the waste water is split into the two partial streams by a membrane separation process, preferably by reverse osmosis.

4. Process according to claim 1 or 2, **characterised in that** the waste water is split into the two partial streams by means of evaporation by at least 50%.

5. Process according to claim 1 or 2, **characterised in that** the waste water is split into the two partial streams by a membrane separation process, preferably by reverse osmosis, followed by evaporation by at least 50%.

6. Process according to one of claims 4 or 5, **characterised by** evaporation by at least 70%, preferably by at least 90%.

7. Process according to at least one of claims 4 to 6, **characterised in that** evaporation is preceded by at least one filtration stage.

8. Process according to at least one of claims 1 to 7, **characterised in that** the pH-value is set to between 2 and 8, preferably between 3 and 5.

9. Process according to one of claims 4 to 7, **characterised in that** the exhaust vapour from evaporation is collected and recycled to the pickling line as rinsing water.

10. Process according to claim 9, **characterised in that** the exhaust vapour undergoes an ion exchange or membrane separation process.

## Revendications

1. Procédé de traitement des eaux de rinçage contenant de l'acide et du métal provenant d'installations de décapage, les eaux de rinçage comprenant de l'acide hydrofluorique, consistant à ajouter une solution basique ou du gaz et fixer les acides libres dans les résidus liquides et séparer consécutivement les résidus liquides en deux flux partiels, le premier flux partiel présentant une faible teneur en métal et le second flux partiel une teneur élevée en métal, **caractérisé en ce que** l'acide hydrofluorique est fixé par l'ajout de la solution d'ammoniac ou gazeuse et est présent en tant que fluorure d'ammonium et les résidus liquides se séparent ensuite en deux flux partiels et seul le flux partiel des résidus liquides présentant une teneur élevée en métal est amené à une installation de recyclage d'une installation de décapage et y est soumis à un traitement pyrohydrolytique, de préférence à un processus de grillage par pulvérisation, l'acide hydrofluorique étant de nouveau produit à partir du fluorure d'ammonium par le traitement pyrohydrolytique.

2. Procédé selon la revendication 1, **caractérisé par** une séparation des eaux usées en un premier flux partiel ayant une faible teneur en métal et une fraction volumique élevée et en un second flux partiel ayant une teneur élevée en métal et une fraction volumique faible.

3. Procédé selon la revendication 1 ou la revendication 2, **caractérisé en ce que** la séparation des résidus liquides s'effectue en deux flux partiels selon un procédé de filtration sur membrane, de préférence par osmose inverse.

4. Procédé selon la revendication 1 ou la revendication 2, **caractérisé en ce que** les résidus liquides se séparent en deux flux partiels par évaporation à au moins 50 %.

5. Procédé selon la revendication 1 ou la revendication 2, **caractérisé en ce que** les résidus liquides se séparent en deux flux partiels selon un procédé de filtration sur membrane, de préférence par osmose inverse, et une évaporation consécutive d'au moins 50 %.

6. Procédé selon l'une quelconque des revendications 4 à 5, **caractérisé en ce qu'**au moins 70 %, de préférence au moins 90 %, sont évaporés.

7. Procédé selon au moins une quelconque des revendications 4 à 6, **caractérisé en ce que** l'évaporation progresse au moins par une étape de filtration.

8. Procédé selon au moins une quelconque des revendications 1 à 7, **caractérisé en ce que** la valeur pH est réglée à une valeur comprise entre 2 et 8, de préférence comprise entre 3 et 5.

9. Procédé selon l'une quelconque des revendications 4 à 7, **caractérisé en ce que** les vapeurs de l'évaporation sont captées et sont remises en circulation en tant qu'eaux de rinçage dans l'installation de décapage.

10. Procédé selon la revendication 9, **caractérisé en ce que** les vapeurs sont soumises à un procédé de filtration sur membrane ou d'échange d'ions.
